# EUROPEAN PATENT APPLICATION

(11) **EP 3 495 135 A1**
(43) Date of publication of application: **12.06.2019**
(21) Application number: 18211588.1
(22) Date of filing: 11.12.2018
(51) Int. Cl.: B32B 3/12, B32B 5/02, B32B 7/12, B32B 15/14, B32B 27/06, B32B 27/08, B32B 27/12, B32B 9/00, B32B 9/04, B32B 27/34, B32B 5/24, B32B 5/18, B32B 3/08, B32B 7/00, B32B 7/022

(54) **ASYMMETRIC CORE SANDWICH STRUCTURE FOR HEATED FLOOR PANELS**

(30) Priority: 11.12.2017 US 201715837741
(71) Applicant: Goodrich Corporation, Charlotte, NC 28217-4578 (US)
(72) Inventor: HU, Jin, Hudson, OH Ohio 44236 (US); CHING, Nathaniel, Hartville, OH Ohio 44632 (US); OWENS, George F., Akron, OH Ohio 44319 (US); SLANE, Casey, Richwood, OH Ohio 43344 (US); BOTURA, Galdemir Cezar, Akron, OH Ohio 44313 (US); HEIN, Brandon, Stow, OH Ohio 44224 (US); MULLEN, James A., Wadsworth, OH Ohio 44281 (US)
(74) Representative: Dehns

(57) **Abstract**

A composite sandwich structure for heating an environment includes a first core layer (14) made from a first cellular material and having a first thickness, and a second core layer (16) made from a second cellular material and having a second thickness less than the first thickness. The structure further includes a heating layer (12) having a thermoelectric heating element and disposed between the first and second core layers. The first core layer (14) is positioned between the heating layer (12) and the environment.

## Description

### BACKGROUND

An aircraft may include heated floor panels to mitigate the effects of cold underfloor temperatures and to help maintain a comfortable cabin temperature. The floor panels are typically supported by an aircraft structure arranged, for example, in a grid-like pattern. The floor panels have structural integrity sufficient to support the weight of people and objects resting on the panels. A metal cover sheet typically forms the top surface of the panel to protect the underlying layers from punctures from high heels, chips from dropped objects, scratches from dragged luggage and/or other floor-traffic related hazards. Some type of floor covering (e.g., carpeting, tiling) is typically placed over the panels for comfort and/or appearance. A heated floor panel can include a weight-supporting layer and a heating layer. The floor panel can also include an insulating layer to prevent heat from exiting the aircraft compartment.

The heating layer of the heated floor panels can be placed just under the metal sheet or near the top surface of the floor. This makes the heating elements of the floor panels susceptible to damage (mechanical or due to fluid intrusion) during installation, maintenance or general use. To address this issue, additional protective layers can be placed over the heating layer. However, such layers can reduce thermal conductivity to from the heating layer to the panel surface, thus requiring a greater power input to achieve the desired panel temperature.

### SUMMARY

A composite sandwich structure for heating an environment includes a first core layer made from a first cellular material and having a first thickness, and a second core layer made from a second cellular material and having a second thickness less than the first thickness. The structure further includes a heating layer having a thermoelectric heating element and disposed between the first and second core layers. The first core layer is positioned between the heating layer and the environment.

### BRIEF DESCRIPTION OF THE DRAWINGS

FIG. 1 is an exploded cross-section showing the various layers of a sandwich panel.
FIG. 2 is a cross-section of an asymmetric core structure shown separately from the sandwich panel of FIG. 1.

### DETAILED DESCRIPTION

The present invention is directed to a composite sandwich panel, and more specifically, to a heated floor panel having an asymmetric core structure. The core structure includes two core layers surrounding a heating layer. The upper core layer is thinner than the lower core layer, which facilitates heat transfer to the panel surface while providing impact protection to the heating layer.

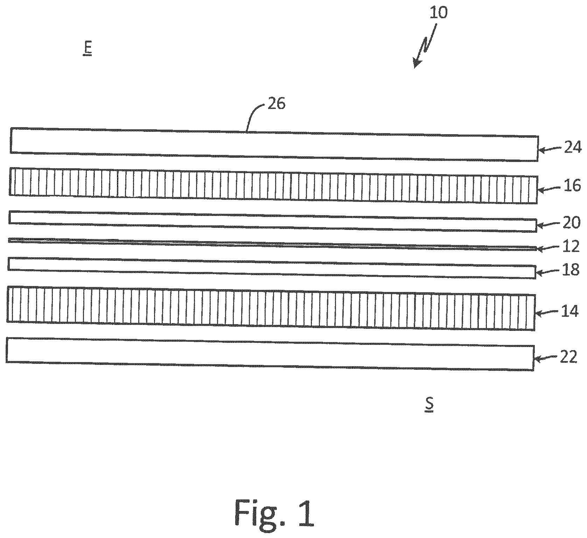

FIG. 1 is a simplified cross-section of floor panel 10. Panel 10 includes heating layer 12, core layers 14 and 16, structural layers 18 and 20, and cover sheets 22 and 24. Surface 26 represents the upper (external) surface of panel 10. Panel 10 is positioned over substrate S, and provides heat to environment E, which is located on a side of panel 10 opposite substrate S.

Heating layer 12 can include a thermoelectric heating element (not shown). The heating element can be a resistive heating element formed, for example, from a metallic material, Positive Temperature Control (PTC) ceramic, PTC polymer, or carbon allotrope material. The heating element can be arranged as an etched foil, wire, or printed-ink element. Other suitable heating elements are contemplated herein. Heating layer 12 can be used to control the temperature of surface 26 of panel 10, which can be installed, for example, in an aircraft cabin or cockpit. In certain embodiments, the heating element can extend across the entire area of heating layer 12. In other embodiments, the heating element can be inset some distance from the edges of heating layer 12 in order to protect the element from fluid spills along or damage at the edges of panel 10.

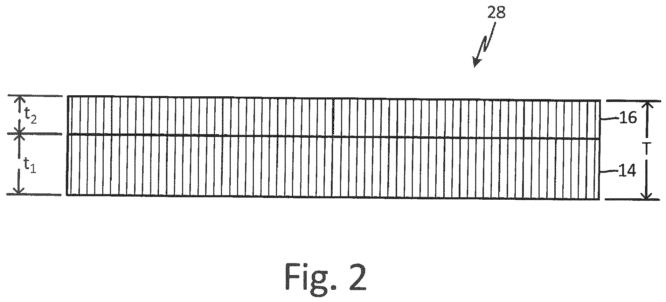

FIG. 2 is a simplified cross-section of lower core layer 14 and upper core layer 16, shown for simplicity removed from panel 10. Together, core layers 14 and 16 form asymmetric core structure 28. Core layers 14 and 16 provide impact resistance to panel 10, and carry shear loads to stiffen floor panel 10. Core layers 14 and 16 can also have insulating and/or flame retardant properties. Core layers 14 and 16 can be formed from an expanded honeycomb, or an open cell or closed cell foam material. For example, core layers 14 and 16 can be formed from an expanded Kevlar® or Nomex® honeycomb, which provide sufficient support to panel 10. Suitable foam materials include polyamide and polyimide foams. In some embodiments, core layers 14 and 16 can be formed from the same material. In other embodiments, core layers 14 and 16 can be formed from different materials. For example, upper core layer 16, which can be subject to greater impact forces from environment E, can be formed from a honeycomb material, while lower core layer 14 can be formed from a foam material. Material choices and combinations can further be based on the specific structural and heating requirements of panel 10. For example, honeycomb materials are lighter than certain foam materials, and may be ideal for applications in which panel weight is a critical factor.

As can be seen in FIG. 2, lower core layer 14 has a first thickness t₁, and upper core layer has a second thickness t₂, which is less than thickness t₁ The sum of t₁ and t₂ is core thickness T, which in various embodiments, remains constant in order to maintain the overall thickness of panel 10. That is, increasing or decreasing t₂ to suit a particular application requires a corresponding adjustment in t₁ to maintain thickness T. Depending on the application, t₂ can range from about 0.05 in (1.27 mm) to about 0.25 in (6.35 mm). Upper core layer 16 is formed from a material (honeycomb or foam) having relatively low thermal conductivity, which can impair the heating of surface 26 of panel 10 compared to heated floor panels with no upper core layer. Therefore, reducing thickness t₂ can increase the thermal transfer properties of upper core layer 16 while still providing the desired structural support and impact resistance for panel 10. Upper core layer 16 also offers increased protection to the heating element of heating layer 12. Upper core layer 16 protects heating layer 12 from mechanical damage during installation, maintenance and use and from fluid intrusion during operation (spills, etc.) and maintenance (e.g., cleaning). Moving heating layer 12 away from surface 26 also allows for localized repair of upper core layer 16 (or other upper layers) without damage to heating layer 12.

In an exemplary embodiment, t₂ can be 50% to 60% of t₁. In such an embodiment, heating layer 12 can sufficiently heat upper cover sheet 24 and environment E, while requiring less power than if t₂ and t₁ were equal. The layers above heating layer 12 (on the side of environment E), meanwhile, experience similar impact stresses to equal-thickness models, while the stresses on heating layer 12 are slightly greater. In other embodiments, t₂ can be anywhere from 20% to 80% of t₁. The variation in t₂ can be based on, for example, heating requirements and power of the heating element, or the impact/puncture risk from environment E.

Lower structural layer 18 and upper structural layer 20 surround heating layer 16 to secure it at the center of panel 10. Structural layers 18 and 20 can be formed from a material that is not electrically conductive. For example, layers 18 and 20 can be a pre-impregnated material, such as a carbon fiber or fiberglass with a resin system such as epoxy, polyurethane, phenolic, cyanate ester, bismaleimide, or other appropriate resins. The resin system in structural layers 18 and 20 can additionally contain short or chopped fibers. Each of structural layers 18 and 20 can include a single ply, or a plurality of plies, depending on, for example, the material chosen to form the structural layers, or the robustness of heating layer 16.

Cover sheets 22 and 24 are the outermost layers of panel 10. Lower cover sheet 22 provides structural support to panel 10 on a side of substrate S. Upper cover sheet 24 provides structural support to panel 10 on the side of panel 10 exposed to environment E, which can be, for example, an aircraft cabin, cockpit, or other compartment. Cover sheets 22 and 24 are relatively stiffer than core layers 14 and 16 (having a higher value of elastic modulus E). Cover sheets 22 and 24 can be formed from a composite material, such as a pre-impregnated carbon fiber, fiberglass, Kevlar®, or combinations thereof. Other suitable reinforced polymer matrix materials are contemplated herein. In some embodiments, cover sheets 22 and 24 can be formed from the same material, while in other embodiments, cover sheets 22 and 24 can be formed from different materials.

Under normal loading, cover sheets 22 and 24 function similar to the flanges of an I-beam, whereby lower cover sheet 22 is in tension and upper cover sheet 24 is in compression. Core layers 14 and 16 function similar to the web of an I-beam by evenly spacing cover sheets 22 and 24. That is, the arrangement of core layers 14 and 16 between cover sheets 22 and 24 gives panel 10 a bending stiffness. Bending stiffness can be increased, for example, by spacing cover sheets 22 and 24 father apart. Therefore, the bending stiffness of panel 10 is generally proportional to core thickness T.

The disclosed sandwich panel having an asymmetric core structure maximizes both the heating of the floor panel surface, the structural integrity of the panel, and the protection of the embedded heating element. The sandwich panel can optionally include adhesives between any of the disclosed layers, or within the layers themselves, in order to solidify the panel structure. Other means of attachment are contemplated herein. In addition to aerospace applications, the disclosed sandwich panel can be used in maritime, railroad, and automotive applications, as well as the construction industry.

### Discussion of Possible Embodiments

The following are non-exclusive descriptions of possible embodiments of the present invention.

A composite sandwich structure for heating an environment includes a first core layer made from a first cellular material and having a first thickness, and a second core layer made from a second cellular material and having a second thickness less than the first thickness. The structure further includes a heating layer having a thermoelectric heating element and disposed between the first and second core layers. The first core layer is positioned between the heating layer and the environment.

The structure of the preceding paragraph can optionally include, additionally and/or alternatively, any one or more of the following features, configurations and/or additional components:

The above structure can further include a first structural layer disposed between the heating layer and the first core layer, and a second structural layer disposed between the heating layer and the second core layer.

In any of the above structures, the first and second structural layers can be formed from a composite fabric pre-impregnated with a resin.

In any of the above structures, the resin can include an epoxy, a polyurethane, a phenolic resin, a cyanate ester, a bismaleimide, or combinations thereof.

Any of the above structures can further include a first cover sheet abutting the first core layer on a side opposite the first structural layer, and a second cover sheet abutting the second core layer on a side opposite the second structural layer.

In any of the above structures, a bending stiffness of the structure can be proportional to a sum of the first thickness and the second thickness.

In any of the above structures, the first and second cover sheets can be formed from a reinforced polymer material.

In any of the above structures, the first cover sheet can abut the environment.

In any of the above structures, the first and second cover sheets can have higher elastic moduli than the first and second core structures.

In any of the above structures, the first and second core layers can form an asymmetric core structure having a core thickness.

In any of the above structures, the second thickness can range from 20% to 80% of the first thickness.

In any of the above structures, the second thickness can range from 50% to 60% of the first thickness.

In any of the above structures, the second thickness can range from 0.05 in (1.27 mm) to 0.25 in (6.35 mm).

In any of the above structures, the first or second cellular material can be a honeycomb material.

In any of the above structures, the first or second cellular material can be a foam material.

In any of the above structures, the first and second cellular material can be the same.

In any of the above structures, the heating element can include a metallic material, PTC ceramic, PTC polymer, or carbon allotrope material.

In any of the above structures, the structure can be an aircraft floor panel.

In any of the above structures, the environment can be an aircraft compartment.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A composite sandwich structure for heating an environment, the structure comprising:
a first core layer (14) comprising a first cellular material and having a first thickness;
a second core layer (16) comprising a second cellular material and having a second thickness less than the first thickness; and
a heating layer (12) disposed between the first and second core layers, the heating layer comprising a thermoelectric heating element;
wherein the first core layer is positioned between the heating layer and the environment.

2. The structure of claim 1 and further comprising:
a first structural layer (18) disposed between the heating layer (12) and the first core layer (14); and
a second structural layer (20) disposed between the heating layer (12) and the second core layer (16).

3. The structure of claim 2, wherein the first and second structural layers (18, 20) are formed from a composite fabric pre-impregnated with a resin, and preferably wherein the resin comprises an epoxy, a polyurethane, a phenolic resin, a cyanate ester, a bismaleimide, or combinations thereof.

4. The structure of claim 2 and further comprising:
a first cover sheet (22) abutting the first core layer (14) on a side opposite the first structural layer (18); and
a second cover sheet (24) abutting the second core layer (16) on a side opposite the second structural layer (20).

5. The structure of claim 4, wherein a bending stiffness of the structure is proportional to a sum of the first thickness and the second thickness.

6. The structure of claim 4, wherein the first and second cover sheets are formed from a reinforced polymer material.

7. The structure of claim 4, wherein the first cover sheet (22) further abuts the environment.

8. The structure of claim 4, wherein the first and second cover sheets (22, 24) have higher elastic moduli than the first and second core layers (14, 16).

9. The structure of any preceding claim, wherein the first and second core layers form an asymmetric core structure having a core thickness.

10. The structure of any preceding claim, wherein the second thickness ranges from 20% to 80% of the first thickness, or wherein the second thickness ranges from 50% to 60% of the first thickness.

11. The structure of any preceding claim, wherein the second thickness ranges from 1.27 mm (0.05 in) to 6.35 mm (0.25 in).

12. The structure of any preceding claim, wherein the first or second cellular material is a honeycomb material, or wherein the first or second cellular material is a foam material.

13. The structure of any preceding claim, wherein the first and second cellular materials are the same.

14. The structure of any preceding claim, wherein the heating element comprises a metallic material, PTC ceramic, PTC polymer, or carbon allotrope material.

15. The structure of any preceding claim, wherein the structure is an aircraft floor panel, and preferably wherein the environment is an aircraft compartment.
